# EUROPEAN PATENT SPECIFICATION

(11) **EP 4 682 844 B1**
(45) Date of publication and mention of the grant of the patent: **23.09.2026**
(21) Application number: 23731724.3
(22) Date of filing: 04.05.2023
(51) Int. Cl.: G06V 20/58, G08G 1/16

(54) **COMPUTER IMPLEMENTED METHOD FOR DETECTING OBJECTS IN DIGITAL IMAGES AND ASSOCIATED SYSTEM FOR DETECTING THE PRESENCE OF OBSTACLES ON ROAD JUNCTIONS**
COMPUTERIMPLEMENTIERTES VERFAHREN ZUR ERKENNUNG VON OBJEKTEN IN DIGITALEN BILDERN UND ZUGEHÖRIGES SYSTEM ZUR ERKENNUNG DER ANWESENHEIT VON HINDERNISSEN AUF STRASSENÜBERGÄNGEN
MÉTHODE MISE EN OEUVRE PAR ORDINATEUR DE DÉTECTION D'OBJETS DANS DES IMAGES NUMÉRIQUES ET SYSTÈME ASSOCIÉ POUR DÉTECTER LA PRÉSENCE D'OBSTACLES DANS DES INTERSECTIONS DE VOIES

(43) Date of publication of application: 21.01.2026
(73) Proprietor: Enclavamientos y Señalización Ferroviaria S.A., 28108 Alcobendas (Madrid) (ES)
(72) Inventor: RULL BANEGAS, Daniel, 28108 Alcobendas (Madrid) (ES); GÓMEZ MORENO, Juan Carlos, 28108 Alcobendas (Madrid) (ES); PARRILLA GARCIA, Carlos Gustavo, 36213 Vigo (ES); ROSENDE BARBOSA, Lorena, 36213 Vigo (ES); LOPEZ RODRIGUEZ, Marcos, 36213 Vigo (ES); LOPEZ PAZOS, Guillermo, 36213 Vigo (ES); HIGGINS, George Adam, 36213 Vigo (ES)
(74) Representative: Isern Patentes y Marcas S.L.
(86) International application number: PCT/ES2023/070282
(87) International publication number: WO 2024/227961

(56) References cited:
- US-A1- 2018 012 085
- US-A1- 2019 102 640
- PAMULA TERESA ET AL: "Detection of Safe Passage for Trains at Rail Level Crossings Using Deep Learning", SENSORS, vol. 21, no. 18, 18 September 2021 (2021-09-18), CH, pages 1 - 11, XP093402133, ISSN: 1424-8220, Retrieved from the Internet <URL:https://www.mdpi.com/1424-8220/21/18/6281/pdf> DOI: 10.3390/s21186281

## Description

### TECHNICAL FIELD OF THE INVENTION

The present invention is related to a computer-implemented method and associated system by means of which it is possible to detect an obstacle on the road to, for example, alert the vehicles that travel on said road to carry out, for example, the appropriate evasive actions. In particular, the invention is focussed on the detection of obstacles at road intersections such as crossroads or level crossings, where the implemented method enables continuous monitoring of the road or intersection regardless of external factors, such as illumination (the change between day/night light, season of the year, etc.) or the weather (rain, snow, fog, etc.).

### STATE OF THE ART

As is widely known, when travelling, land vehicles travel on routes that cross/intersect each other. For example, trains or railway vehicles travel along rail roads that may intersect with a car road, in what is known as a level crossing. In this sense, another vehicle (for example, a car) can obstruct the level crossing when it is at the intersection such that it would give rise to a collision, run over, derailment, etc., if the latter were to travel on the rails crossing the level crossing. For example, a car can get trapped between the barriers, when they have been lowered and are not raised in time, or the car can suffer a mechanical failure that disables same from leaving the level crossing.

Some known systems detect the presence of a car or obstacle, generally speaking, at a level crossing, or at any other type of road intersection, using radar, and provide warnings to railway personnel, the greatest limitation of this type of system being that detected objects can only be classified by their size.

In other cases, the presence of an obstacle on the road is detected by means of ultrasonic or infrared transducers and the corresponding warning signals are sent.

Other examples of transducers are metal loops, wherein the detection systems using this transducer can only detect metal objects when they produce an interference in the magnetic field of the intersection, which is also its greatest limitation, since in addition to implementation and maintenance costs, not being able to detect non-metal objects that can also be found at the intersection can cause safety problems or accidents.

According to the above, in some cases, the detection of the obstacle on the road, intersection, level crossing, etc., gives erroneous readings or detections, indicating the presence of an obstacle which, in reality, is no longer on the road, in other words, a "false positive" or, as in the case of metal loops for non-metal obstacles, being unable to detect the presence of obstacles, in other words, a "false negative", which generates errors in the notification of the detection of an obstacle or the absence thereof, or in the subsequent processing of the data obtained from said detection. Pamula ET AL: "Detection of Safe Passage for Trains at Rail Level Crossings Using Deep Learning", Sensors, vol. 21, no. 18, 18 September 2021, ISSN: 1424-8220, DOI: 10.3390/s21186281 represents relevant prior art.

In other cases, and depending on the means used to detect the obstacle, the detection thereof may be affected by changing environmental conditions, such as the change in day/night light. Therefore, for example, in low lighting conditions, the detection of the obstacle can be affected or even prevented, with the corresponding drawbacks caused by this.

Therefore, the need to provide a method and system for the detection of an obstacle on the road, particularly at a road intersection, more particularly at a level crossing, becomes latent, wherein the method avoids false detections and at the same time operates continuously and efficiently regardless of lighting conditions, or other environmental factors.

### DESCRIPTION

In response to the found need, the present invention provides the computer-implemented method for detecting the presence and classification of objects in at least one control region of a digital image.

For this, from the reception of a digital image, the computer-implemented method being claimed comprises the steps of:
- *detecting the presence* of *at least one object in the control region of the digital image by feeding said digital image to an artificial intelligence model configured to detect the presence of the at least one object in an image;*
   *when the presence of the object is not detected in the digital image;*
- *detecting the absence* of *at least one element in the digital image control region by feeding the digital image to an artificial intelligence model configured to detect the absence of the at least one element in an image, and in the event that the non-absence* of *at least one element is detected in the control region, the presence* of *at least one object is detected in the digital image.*

Within the context of the invention, a digital image must be understood as a two-dimensional representation of an image, wherein said image is suitable or adapted for its treatment or processing on a computer or the like.

The digital image can be a two-dimensional representation of an image from a numerical matrix, frequently in binary, wherein, depending on the resolution, the image is static or dynamic, it can be a matrix image (or bitmap or pixels) or a graphic vector.

Regarding the bitmap or pixels, a digital image comprises a plurality of pixels, preferably arranged according to a pattern or matrix, obtained by image acquisition means; a digital image should be considered as such even if it has undergone processing, e.g. filtering, rotation, masking, decimation or the like, provided that the target information can be recovered from the raw digital image. Preferably, the image acquisition means are arranged and directed to an area or region of interest, such as a road intersection, a level crossing, etc., so that the execution of the claimed method entails the detection of an obstacle at such a road intersection.

The image acquisition means are preferably arranged or form part of a detection device, and/or a detection system, such that said acquisition means are configured to capture an image of an area of interest where said area of interest is two-dimensionally represented into a digital image.

In addition to the above, when said digital image is captured or registered on a road or road intersection by the image acquisition means, in other words, the control region contains a road or road intersection, the detection of the object in the control region of the digital image is indicative of the presence of an obstacle on the road or at the road intersection.

In addition to the pixels that make up the digital image, in some embodiments, said digital image comprises associated data, such as image geolocation data, time, image capture conditions (exposure, etc.), image identification, or other information associated to the image. In other embodiments, the associated data comprises image metadata.

According to the scope of the invention, road intersection must be understood, in a nonlimiting way, as those elements of the road and transport infrastructure where two or more roads intersect. These infrastructures allow users to exchange between roads. The crossroads can be given with a level crossing or with an overpass. The term road intersection also includes within its scope elements of other transport systems, such as railways or bicycle lanes, highways, maritime crossings, etc.

Moreover, in one embodiment, the artificial intelligence models are part of or are housed in a system for detecting objects and/or obstacles, wherein such models may in turn be distributed in one or more computer systems provided with processing means that may either be part of a computer system server or may be independent units in data communication with the computer system, for example, one or more processing units configured to store and execute an artificial intelligence model, feed input data to same such as digital images and recover data therefrom.

Artificial intelligence model is understood as a computer implementation of an artificial intelligence algorithm trained on a training data set, wherein the training data set comprises relevant digital images labelled according to the intended purpose of the artificial intelligence algorithm model. The artificial intelligence algorithms used to obtain the artificial intelligence model can be of any type, and preferably an artificial neural network, such as a convolutional neural network, or an open source neural network.

According to the above, the detection of an object in the digital image should be understood as a process based on artificial vision to detect whether an object, such as an object selected from a list of detectable objects, such as a car, motorcycle, animal, pedestrian, etc., has been imaged as an object, wherein said object may be an estimate of the object or the exact object.

In relation to the artificial intelligence model, due to training, it is possible to classify and discern the detected objects using the same, for example, it is possible to discern between a car, a person, a motorcycle, an animal, etc., and also to discern between objects of the same category, for example, between a truck and a car, between a motorcycle and a bicycle, between a dog and a cow, etc.

Also, as evidenced in the steps of the method object of the invention, in the event that this first artificial intelligence model does not detect the presence of an object in the digital image, an additional step is carried out consisting in the detection of the absence of an element in said digital image through an artificial intelligence model trained therefor.

Analogous to how artificial intelligence has been trained to determine if there is an object in the control region of the digital image, another artificial intelligence is trained to determine that there is no element in the control region of the image. Thus, when an object is not detected with the method of the invention, this means that a double check has been made, firstly that the object is not in the control region and, secondly, that said control region is empty or absent of a detectable element.

Going into more detail, within the list of detectable objects, there are, for example, but not limited to, train, motorcycle, truck and car, wherein the artificial intelligence model results in the "non-detection of an object" when none of said objects is detected in the control region of said digital image. Therefore, it is possible that there are other objects in the control region, such as a bicycle or a pedestrian, but since they do not match those in the list of detectable objects (e.g., train, motorcycle, car, etc. ), they are not detected by the artificial intelligence model for detecting objects in an image.

**The** control region of the image is then checked for certain elements not to be present, in other words, for them to be absent, to ensure that there is actually no object in the control region of the digital image.

In this sense, the artificial intelligence model configured to detect the absence of the at least one element in an image is trained to detect the absence of an element from a list of detectable elements, for example, pedestrian, dog, bicycle, etc., so that if this artificial intelligence model detects the absence of such elements in the control region of the digital image, the object is not found in the control region of the digital image.

According to the above, object detection in the digital image should also be understood as a process based on artificial vision to detect if an element, such as a selected element within a list of detectable elements, such as a pedestrian, dog, bicycle, etc., without being limited to same, is not present in the control region of the digital image.

In this sense, this "second" artificial intelligence will detect the absence of at least one element in the digital image, and in the event that the non-absence of at least one element is detected, the presence of at least one element is detected in the digital image.

This step of the method has been designed so that, even if an object is not found/detected, for example, the digital representation of a car in the control region, an element can be detected, for example, the digital representation of a pedestrian in the control region, if this element is located in the control region. In this sense, in the digital image, the control region will contain an element, which will be detectable by the artificial intelligence model configured to detect the absence of the at least one element in an image. Thus, if this element is located in the control region, the non-absence of said element will be detected by the artificial intelligence model configured for this purpose, so that the presence of an object will have been detected in the digital image.

If, on the contrary, none of the elements in the list of detectable elements is detected in the control region by the artificial intelligence model, the absence of said element in the digital image is detected and, therefore, it will have been detected that there is no object in the digital image.

The implementation of this step of absence detection by means of this "second" artificial intelligence model is indicated to carry out a double check, in order to guarantee that the digital image is clear of any object, determining, first, that there is no object present in the control region and, second, that there is an absence of an element in the control region, in other words, that it is empty. This double check has notable advantages when the method is executed in an obstacle detection system, since it makes it possible to guarantee the accurate detection of an obstacle or its absence, and above all, to guarantee that there is no obstacle, when it is not detected.

The detection of the presence of an obstacle at the road intersection should also be understood as a process based on artificial vision to detect if an obstacle, such as a pedestrian, animal or small vehicle, is not represented in the image as an element, wherein the said element may be an estimate or an exact representation thereof.

In an alternative embodiment of the method, a registered digital image has been provided, in other words, an image already registered previously or captured at some previous moment, for example, a second before, so that, when the presence of an object is not detected in the digital image (the current digital image) by the artificial intelligence model configured to detect the presence of an object in an image, the step of detecting the absence of at least one element in the image is carried out also in said registered digital image.

Preferably all captured digital images are stored on the storage media, so that there will always be registered digital images stored.

In preferred embodiments, digital images are captured and stored at 1 second intervals from each other. So if, for example, in the digital image (the current image, in which the presence of an object is being detected) the absence of an element is detected in the control region, it is checked whether the absence of an element (the same or another) has also been detected in the control region of the registered digital image, in other words, the image obtained just 1 second ago and which is stored in the storage means. Thus, if the absence of the element has also been detected in the registered digital image, the absence of the object in the control region, in other words, that the control region is empty, can be ascertained more accurately.

At this point it is worth clarifying that the object and the element to be detected are generally "non-stationary" so that in a series of subsequent digital images the object and/or element may appear in different positions within same, and will be detected as long as at least a portion thereof is within the control region. In preferred embodiments, the digital images in which the absence of an element has been detected are stored, for example, in a registered element storage unit, in order to be able to be compared according to the described teachings. In even more preferred embodiments, the absence of the element is checked in at least the two registered images subsequent to the digital image, when said absence of the element has been detected in the digital image.

As said, the registered digital image may contain an object that no longer appears in the (current) digital image. So, if at least one object is not detected in the digital image, but it is verified that an object has been detected in the registered digital image, then the absence of at least one element in said digital image is detected to determine that the digital image has no objects and no elements, in other words, the control region is "empty". According to the previous paragraphs, from a series of iterations, for example, three, in which the absence of an element is detected in subsequent registered digital images, the algorithm will conclude that there is no object in the digital image, in other words, that the control region is empty or clear of objects.

Moreover, in alternative embodiments the digital image comprises associated data, wherein the method further comprises the step of including the detected object or the absence of element in the associated data.

Additionally, the method comprises a step of determining a set of geographic coordinates of the digital image from the data associated therewith.

Likewise, the digital image comprises an RGB (Red, Green, Black) format or an IR (InfraRed) format, so that same can be thus obtained by means of the image acquisition means, wherein the artificial intelligence model configured to detect the presence of the at least one object in an image is further configured to detect the object in the digital image in either RGB format and/or IR format, and/or in a combination of said formats.

This is advantageous because it is possible to detect the object regardless of the digital image format used, or by merging the same to obtain the image definition that best allows detecting the object and/or the absence of the element.

In addition to the above, the method includes a step in which it is verified that the image acquisition means are capturing images in the best possible conditions, for which, for example, through the appropriate sensors, parameters such as the lighting, focus, exposure, etc., are checked.

In addition, it is possible to combine the digital images coming from different formats so that the respective artificial intelligence models detect the object or the absence of the element in the combined format digital image. Thus, in situations of changing illumination, such as sunrise or sunset, the combination of formats, for example, RGB and IR, will result in an image in which the required means are arranged so that the corresponding artificial intelligence model is capable of detecting the presence of at least one object or the absence of at least one element.

With respect to the control region of the digital image, this corresponds to an area or portion of said image in which the presence of an object or the absence of an element is expected to be detected where this control region falls within a frame that preferably remains constant in each digital image. The control region is modifiable and can range from an area of the digital image to the complete image of the control area.

It is also important to note that the control region may be comprised of the fusion of several digital images, wherein the control region will be the sum of each of the individual control regions of each digital image. This is especially suitable when receiving several digital images captured from a point of interest from different perspectives, wherein the control region will be the sum, juxtaposition or composition of each of the control regions of the individual digital images, so that the object presence or element absence will be detected in this composite control region.

Alternatively, it is possible to detect "permanent" objects in the control region. The definition of permanent object relates to an object that is always present in the control region and is detectable by the artificial intelligence model configured to detect an object and is simultaneously detectable by the artificial intelligence model configured to detect the absence of an element, but its detection as an object or element in the control region does not result in the detection of an object in the control region according to the teachings heretofore described, while detection of its absence will result in the absence of this element, which can be used to issue a warning that a permanent object is lacking or missing from the digital image.

In another embodiment, the invention proposes a system for detecting the presence of obstacles at road intersections, wherein the system has image acquisition means configured to obtain at least one digital image, and processing means or computer means configured to execute the computer-implemented method as described so far.

In this embodiment, the image acquisition means are arranged such that they capture digital images, or at least one digital image, of a road intersection, such as, for example, a level crossing, such that a physical obstacle (e.g., a car crossed at the level crossing) at the intersection will be represented as an object in the control area of the digital image and, through the execution of the method, the system will be able to detect the presence or not of an obstacle at the intersection.

In alternative embodiments, the system comprises storage means configured to store the captured digital images. Thus, the system is able to consider an obstacle detected at the road intersection and generate some type of action in accordance with said detection, when the presence of the object has been detected in the (current) digital image and it has been verified that an object has also been detected in at least one of a series of subsequent images. Thus, if the object appears in the (current) digital image, and also appears in two subsequent images, the system detects that there is an obstacle at the intersection. Images are captured at intervals of, for example, one second.

Alternatively, the system comprises communication means configured to transmit and receive data and/or external instructions.

Preferably, the system comprises a set of electronic cards which, based on the information extracted from collecting data on the detection of objects or obstacles by means of the implemented method of the invention and the information provided by same, allows reporting using, for example, voltage-free contacts, to an external system or terminal about the detection of said obstacle on the road, based on the detection of an object or absence of an element in the control region of the digital image captured from the road. It is also important to highlight that all the electronic part associated with the system is configurable according to the type of application and according to the inputs and outputs of the system.

Advantageously, this system makes it possible to carry out a complete and exhaustive monitoring in real time of a road able to be traversed by vehicles, in particular at a road intersection, in order to detect whether there is an obstacle at the intersection. In addition, through the use of artificial vision technology, the system makes it possible to detect the type of obstacle present at the intersection. Likewise, it allows a continuous feedback in real time to the computer system, improving the reliability of the inspection and reducing false positives continuously and indefinitely.

In addition to the above, given that on a road or road intersection there are immobile objects that will always appear in the control region of the digital image, such as a traffic light or a traffic sign, the absence of any of said elements can be detected and send the corresponding warning signals.

### BRIEF DESCRIPTION OF THE FIGURES

The foregoing and other advantages and features will be more fully understood from the following detailed description of some exemplary embodiments with reference to the attached drawings, which are to be considered by way of illustration and not limitation, wherein:
- Figure 1 is a plan view of a level crossing in which an obstacle detection system has been arranged at a road intersection, wherein said system executes the computer-implemented method to detect objects in a digital image.
- Figure 2 is a view of a digital image captured by the image detection means of the system for detecting obstacles, wherein an object to be detected appears in the control region of the digital image.

### DETAILED DESCRIPTION OF AN EXEMPLARY EMBODIMENT

Numerous specific details are set forth in the following detailed description in the form of examples to provide a thorough understanding of the relevant teachings. However, it will be apparent to those skilled in the art that the present teachings can be practiced without such details.

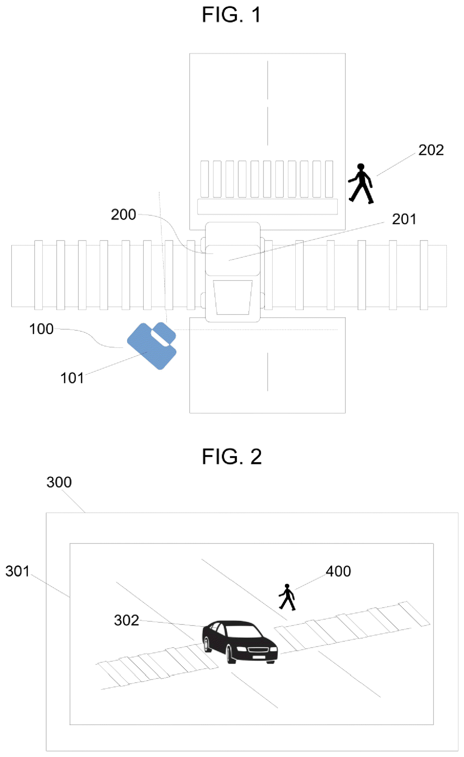

The focus of the present invention is:
*Computer-implemented method to detect the presence of objects in at least one control region* of a *digital image, comprising the following steps:*
- *detecting the presence* of *at least one object in the control region of the digital image by feeding said digital image to an artificial intelligence model configured to detect the presence of the at least one object in an image;*
   *when the presence of the object is not detected in the digital image;*
- *detecting the absence* of *at least one element in the digital image control region by feeding the digital image to an artificial intelligence model configured to detect the absence of the at least one element in an image, and in the event that the non-absence* of *at least one element is detected, the presence* of *at least one object is detected in the digital image.*
wherein, a particular exemplary embodiment of this method can be seen in Figure 1, in which the computer-implemented method is executed in a system for detecting obstacles at road intersections to detect the obstacles present at a road intersection, in the particular case, at a level crossing as illustrated.

Thus, the system for detecting the presence of obstacles at road intersections comprises image detection means 101 which, in this embodiment, take the form of a digital camera 101 capable of taking photographic captures of the road intersection in digital format. Although in this embodiment, a single digital camera has been exemplified, it is possible to obtain digital images from various points of the road intersection, by means of different digital cameras, wherein the control region 301 will be the sum of the control regions of each one of the digital images captured.

The digital images of the road intersection are continuously captured and processed by the artificial intelligence model configured to detect the presence of the at least one object in an image that is stored in a computer system that has processing and storage means (not shown) suitable to carry out the function described, wherein digital images are stored continuously.

Thus, in this embodiment, from the digital images, the artificial intelligence model is detecting image by image the presence of an object (obstacle at the intersection) in the control area 301 of each digital image 300. Given that, depending on the focal aperture of the digital camera 101 and its position in relation to the road intersection, or the arrangement of several digital cameras, as mentioned above, the digital image 300 captures everything that is at the road intersection, so that the control region 301 is defined as that area of the digital image 300 in which the object 200 is expected to be detected.

As seen in Figure 1, a car 201 is positioned in the middle of the intersection, so that, as seen in Figure 2, the car 201 is seen in the control region 301 as an object 302 within the same.

In this sense, the artificial intelligence model is configured (trained) to discern what type of object it is from a list of detectable objects based on the shape of the object detected in the control area. The list may contain, but is not limited to, car, motorcycle, train, truck, bicycle, etc. So, if the object 302 within the control region 301 corresponds to one of the list, the artificial intelligence model will have detected an object 302 in the digital image 300, therefore, the system will have detected the presence of an obstacle at the road intersection.

Given that the obstacle detection system at road intersections is intended to operate continuously, in other words, 24 hours a day, every day, it is possible that, when the object 302 appears, or at least a portion thereof, in the control region 301, is the first time that said object 302 is detected, a single detection of the object 302 being enough for the system to have detected the presence of an obstacle 200 at the road intersection and, consequently, proceed to execute the actions corresponding to said detection, for example, sending signals to vehicles approaching the intersection to warn that it is obstructed.

Moreover, when the artificial intelligence model does not detect an object in the control region 301 of the digital image 300, in other words, that there is no obstacle 200 at the road intersection, for example, the car 201 represented as object 200 in the digital image 300 has not yet entered the control region 301 or has left the same, the system proceeds to detect that the road intersection is empty, in other words, clear of an obstacle 200, which is done by detecting the absence of an element 400 in the digital image 300 by means of an artificial intelligence model configured to detect the absence of the at least one element 400 in an image.

According to the above, this artificial intelligence model is configured (trained) to detect at least one element 400 based on the shape of said element 400 that is detected in the control region 301, and discern what type of element it is from a list of detectable elements. Said list may contain, but is not limited to, car, train, pedestrian, bicycle, dog, scooter, etc. So that, if the element 400 within the control region 301 corresponds to one of the list, the artificial intelligence model will have detected the non-absence of an element 400 in the digital image 300, therefore, consequently, the system will have detected the presence of an obstacle at the road intersection.

The foregoing is so that, even if a car 200 is not found/detected in the middle of the road intersection, for example, a pedestrian 201 can be located if it is found at said road intersection, so that in the digital image 300, the control region 301 will have a representation of said pedestrian 201 as an element 400, which will be detectable by the artificial intelligence model configured to detect the absence of at least one element in an image. Thus, if this element 400 is located in the control region 300, the non-absence of said element 400 will be detected by the artificial intelligence model configured for this purpose, so that the system will have detected the presence of an obstacle at the road intersection.

If, on the other hand, none of the elements 400 of the list of detectable elements is detected in the control region 300 by the artificial intelligence model dedicated to that purpose, the absence of said element 400 in the digital image is detected and, therefore, the system will have detected that there is no obstacle at the road intersection. Following the example, there is no car 201, no pedestrian 202, etc., at the road intersection.

By means of this "second" artificial intelligence, a double check is made to guarantee that the road intersection is clear of any obstacle 200, whether an object 302 is not present in the digital image 300, or if there is absence of an element 400.

The system will consider the presence of an obstacle 200 as not detected when the object 302 has not been detected in a single digital image, in other words, in the first capture. However, in the preferred embodiment, when the object 302 is not detected, by means of double verification, the absence of the element 400 in the control region 301 is verified, for which it is verified in the subsequent stored images, for example, in the two subsequent stored digital images 300, if the absence of the element 400 has been detected in said stored images to establish the non-presence of an obstacle 302 and the non-presence of an element 400 at the road intersection, in other words, that the road intersection is empty.

The number of iterations is configurable. In the preferred embodiment, three iterations are made for the system to establish the absence of an object 400, in other words, for the system to establish that the road intersection is clear of any obstacles. However, it can be done, as has been said, with a single iteration (a single image capture) up to "n" iterations. The number of iterations will be related to the time interval between which the digital images are captured. In this exemplary embodiment, digital images 300 are captured every second, so after three seconds the system will have detected that the road intersection is clear of obstacles and safe.

In a preferred embodiment, the list of detectable objects and the list of detectable elements are the same, so that, for example, a car 201 is not detected, and the absence of said car 201 is detected (with the second artificial intelligence) at the road intersection. Therefore, the road intersection is clear.

That said, when the presence of the object 302 is not detected in the digital image 300 by the artificial intelligence model configured to detect the presence of an object in an image, the absence of the element 400 is detected in the digital image 300, if the object 302 has been detected in at least one registered digital image 300. In this way, if the object 302 had been detected in the previous iteration, since it was not detected in the current iteration, it is verified that said object is no longer in the control region 301 and that the latter is in turn clear of elements 400 through several iterations to ensure that the road intersection is clear.

In addition to the above, the camera can capture digital images in different formats such as IR, RGB, among others, being able to detect objects or the absence of elements in one or another type of format, or in a combination of said formats that allows detection regardless of the illumination conditions of the intersection.

Due to the foregoing, the obstacle detection system works in real time, in other words, 24 hours a day, 7 days a week, controlling the road intersection. This implies that it works at all times, regardless of the state of the road intersection, the digital inputs/outputs or whether or not there are obstacles.

Moreover, in a preferred embodiment, the system performs update checks every 5-10 minutes of the camera monitoring, with an image capture to find out if they are optimally carried out and there are no errors.

The different verifications of the camera that are carried out are:
- Verification of required use of the IR infrared format. An image is captured and according to a preset luminosity threshold, the level of darkness it presents is verified. An update is done every 5-10 minutes
- Checking the exposure time, "image freeze", wherein the exposure time is so short that nothing in the frame can move or change position with respect to a camera point of view. The "freeze" of the image is verified with the IR function turned on (black and white image) and turned off.
- Checking the orientation of the camera. The framing area of the digital image is examined to contain the control region 301.
- Checking the focus of the camera. Verification of automatic lens adjustments to find the maximum resolution, sharpness and contrast of the digital image and therefore of the control region.

## Claims

1. A computer-implemented method for detecting the presence of objects in at least one control region (301) of a digital image (300), the control region (301) comprising a land or railway vehicle road intersection comprising the following steps:
- detecting the presence of at least one object (302) in the digital image (300) by feeding said digital image (300) to an artificial intelligence model configured to detect the presence of the at least one object in an image; and
**characterised in that**
only when the presence of the object (302) is not detected in the digital image (300):
- detecting the absence of at least one element (400) in the digital image (300) by feeding the digital image (300) to another artificial intelligence model configured to detect the absence of the at least one element in an image, and in the event that the non-absence of at least one element is detected by the another artificial intelligence model, the presence of at least one object (302) is detected in the digital image;
wherein, when the presence of an object (302) is not detected in the digital image (300) by the artificial intelligence model configured to detect the presence of an object in an image, the step of detecting the absence of at least one element (400) in the digital image (300) is further carried out in a registered digital image, which is a digital image (300) captured at some previous moment.

2. **The** method according to claim 1, wherein the registered digital image corresponds to a digital image (300) in which the artificial intelligence model configured to detect the absence of the at least one element in an image has detected the absence of at least one element (400).

3. **The** method according to any of claims 1-2, wherein the artificial intelligence model configured to detect the presence of the at least one object in an image and/or the artificial intelligence model configured to detect the absence of the at least one element in an image is configured to detect the at least one object (302) or the at least one element (400) from predefined lists of objects and elements.

4. **The** method according to claim 3, wherein the predefined lists of objects and elements comprise, among others, people, animals, vehicles.

5. **The** method according to any of claims 1-4, wherein it comprises the step of receiving the digital image (300) from a detection device (100) that comprises image acquisition means (101) configured to capture a digital image of an area of interest.

6. The method according to claim 5, wherein the image acquisition means (101) of the detection device (100) is configured to capture a digital image of a road intersection.

7. The method according to any of claims 5-6 comprising a step of checking the images acquired by the image acquisition means (101) of the detection device (100).

8. The method according any of claims 1-7, wherein the digital image (300) comprises associated data, and wherein the method further comprises the step of including the detected object (302) or the absence of the element (400) to the associated data.

9. The method according to any of claims 1-8, wherein the method further comprises the step of determining a set of geographic coordinates of the digital image (300) from the associated data.

10. The method according to any of claims 1-9, wherein the digital image (300) comprises an RGB format or an IR format, and wherein the artificial intelligence model configured to detect the presence of the at least one object in an image is further configured to detect the object (302) in the digital image (300) in RGB format and/or in IR format, and/or in a combination of said formats.

11. A system for detecting the presence of obstacles at road intersections by executing a method according to any of claims 1 to 10, wherein the system comprises:
at least one detection device (100) provided with image acquisition means (101) configured to obtain digital images of a road intersection,
at least one processing unit configured to detect the presence of an object or the absence of an element in the digital image, wherein when the presence of the object or the non-absence of an element is detected in the digital image, the presence of an obstacle is detected at the road intersection; and
communication means configured to enable data communication with a data network.

## Patentansprüche

1. Computerimplementiertes Verfahren zur Erkennung der Anwesenheit von Objekten in mindestens einem Kontrollbereich (301) eines digitalen Bildes (300), wobei der Kontrollbereich (301) eine Straßenkreuzung für Land- oder Schienenfahrzeuge umfasst, das die folgenden Schritte umfasst:
- Erkennung der Anwesenheit mindestens eines Objekts (302) in dem digitalen Bild (300) durch Zuführen des genannten digitalen Bildes (300) zu einem Modell künstlicher Intelligenz, das dazu konfiguriert ist, die Anwesenheit des mindestens einen Objekts in einem Bild zu erkennen; und
**dadurch gekennzeichnet, dass**
nur wenn die Anwesenheit des Objekts (302) nicht im digitalen Bild (300) erkannt wird folgendes stattfindet:
- Erkennung der Abwesenheit mindestens eines Elements (400) im digitalen Bild (300) durch Zuführen des digitalen Bildes (300) zu einem anderen Modell künstlicher Intelligenz, das dazu konfiguriert ist, die Abwesenheit des mindestens einen Objekts in einem Bild zu erkennen, und für den Fall, dass die Nichtabwesenheit mindestens eines Elements von dem anderen Modell künstlicher Intelligenz erkannt wird, die Anwesenheit mindestens eines Objekts (302) im digitalen Bild erkannt wird;
wobei, wenn die Anwesenheit eines Objekts (302) im digitalen Bild (300) von dem zur Erkennung der Anwesenheit eines Objekts in einem Bild konfigurierten Modell künstlicher Intelligenz nicht erkannt wird, der Schritt der Erkennung der Abwesenheit mindestens eines Elements (400) im digitalen Bild (300) ferner in einem registrierten digitalen Bild durchgeführt wird, bei dem es sich um ein digitales Bild (300) handelt, das zu einem früheren Zeitpunkt aufgenommen wurde.

2. Verfahren nach Anspruch 1, wobei das registrierte digitale Bild einem digitalen Bild (300) entspricht, in dem das zur Erkennung der Abwesenheit des mindestens einen Objekts in einem Bild konfigurierten Modell künstlicher Intelligenz die Abwesenheit von mindestens einem Element (400) erkannt hat.

3. Verfahren nach einem der Ansprüche 1-2, wobei das zur Erkennung der Anwesenheit mindestens eines Objekts in einem Bild konfigurierte Modell künstlicher Intelligenz und/oder das zur Erkennung der Abwesenheit mindestens eines Objekts in einem Bild konfigurierte Modell künstlicher Intelligenz dazu konfiguriert ist, das mindestens eine Objekt (302) oder das mindestens eine Element (400) aus vordefinierten Listen von Objekten und Elementen zu erkennen.

4. Verfahren nach Anspruch 3, wobei die vordefinierten Listen von Objekten und Elementen unter anderem Personen, Tiere, Fahrzeuge umfassen.

5. Verfahren nach einem der Ansprüche 1-4, wobei es den Schritt des Empfangens des digitalen Bildes (300) von einer Erkennungsvorrichtung (100) umfasst, die ein Bilderfassungsmittel (101) umfasst, das konfiguriert ist, ein digitales Bild eines relevanten Bereichs aufzunehmen.

6. Verfahren nach Anspruch 5, wobei das Bilderfassungsmittel (101) der Erkennungsvorrichtung (100) dazu konfiguriert ist, ein digitales Bild einer Straßenkreuzung aufzunehmen.

7. Verfahren nach einem der Ansprüche 5-6, umfassend einen Schritt zur Überprüfung der von dem Bilderfassungsmittel (101) der Erkennungsvorrichtung (100) aufgenommenen Bilder.

8. Verfahren nach einem der Ansprüche 1-7, wobei das digitale Bild (300) zugeordnete Daten umfasst und wobei das Verfahren ferner den Schritt des Hinzufügens des erkannten Objekts (302) oder der Abwesenheit des Elements (400) zu den zugeordneten Daten umfasst.

9. Verfahren nach einem der Ansprüche 1-8, wobei das Verfahren ferner den Schritt der Bestimmung eines Satzes geografischer Koordinaten des digitalen Bildes (300) aus den zugeordneten Daten umfasst.

10. Verfahren nach einem der Ansprüche 1-9, wobei das digitale Bild (300) ein RGB-Format oder ein IR-Format umfasst und wobei das zur Erkennung der Anwesenheit mindestens eines Objekts in einem Bild konfigurierte Modell künstlicher Intelligenz ferner so konfiguriert ist, dass es das Objekt (302) im digitalen Bild (300) im RGB- und/oder IR-Format und/oder in einer Kombination der genannten Formate zu erkennen.

11. System zur Erkennung der Anwesenheit von Hindernissen an Straßenkreuzungen durch Ausführung eines Verfahrens nach einem der Ansprüche 1 bis 10, wobei das System Folgendes umfasst:
mindestens eine Erkennungsvorrichtung (100), die mit einem Bilderfassungsmittel (101) versehen ist, das dazu konfiguriert ist, digitale Bilder einer Straßenkreuzung zu erfassen,
mindestens eine Verarbeitungseinheit, die dazu konfiguriert ist, die Anwesenheit eines Objekts oder die Abwesenheit eines Elements im digitalen Bild zu erkennen, wobei bei Erkennung der Anwesenheit des Objekts oder der Nichtabwesenheit eines Elements im digitalen Bild das Vorhandensein eines Hindernisses an der Straßenkreuzung erkannt wird; und
ein Kommunikationsmittel, das dazu konfiguriert ist, eine Datenkommunikation mit einem Datennetzwerk zu ermöglichen.

## Revendications

1. Procédé mis en œuvre par ordinateur permettant de détecter la présence d'objets dans au moins une région de contrôle (301) d'une image numérique (300), la région de contrôle (301) comprenant une intersection routière entre une voie de circulation de véhicules et une voie ferrée, comprenant les étapes suivantes :
- détecter la présence d'au moins un objet (302) dans l'image numérique (300) en alimentant, avec ladite image numérique (300), un modèle d'intelligence artificielle configuré pour détecter la présence de l'au moins un objet dans une image ; et
**caractérisé en ce que**
uniquement lorsque la présence de l'objet (302) n'est pas détectée dans l'image numérique (300) :
- détecter l'absence d'au moins un élément (400) dans l'image numérique (300) en alimentant, avec l'image numérique (300), un autre modèle d'intelligence artificielle configuré pour détecter l'absence de l'au moins un élément dans une image, et dans le cas où la non-absence d'au moins un élément est détectée par l'autre modèle d'intelligence artificielle, la présence d'au moins un objet (302) est détectée dans l'image numérique ;
dans lequel, lorsque la présence d'un objet (302) n'est pas détectée dans l'image numérique (300) par le modèle d'intelligence artificielle configuré pour détecter la présence d'un objet dans une image, l'étape de détection de l'absence d'au moins un élément (400) dans l'image numérique (300) est en outre effectuée dans une image numérique enregistrée, qui est une image numérique (300) capturée à un moment antérieur.

2. Procédé selon la revendication 1, dans lequel l'image numérique enregistrée correspond à une image numérique (300) dans laquelle le modèle d'intelligence artificielle configuré pour détecter l'absence de l'au moins un élément dans une image a détecté l'absence d'au moins un élément (400).

3. Procédé selon l'une quelconque des revendications 1-2, dans lequel le modèle d'intelligence artificielle configuré pour détecter la présence de l'au moins un objet dans une image et/ou le modèle d'intelligence artificielle configuré pour détecter l'absence de l'au moins un élément dans une image est configuré pour détecter l'au moins un objet (302) ou l'au moins un élément (400) à partir de listes prédéfinies d'objets et d'éléments.

4. Procédé selon la revendication 3, dans lequel les listes prédéfinies d'objets et d'éléments comprennent, entre autres, des personnes, des animaux, des véhicules.

5. Procédé selon l'une quelconque des revendications 1-4, dans lequel celui-ci comprend l'étape consistant à recevoir l'image numérique (300) d'un dispositif de détection (100) qui comprend des moyens d'acquisition d'images (101) configurés pour capturer une image numérique d'une zone d'intérêt.

6. Procédé selon la revendication 5, dans lequel les moyens d'acquisition d'images (101) du dispositif de détection (100) sont configurés pour capturer une image numérique d'une intersection routière.

7. Procédé selon l'une quelconque des revendications 5-6, comprenant une étape consistant à vérifier les images acquises par les moyens d'acquisition d'images (101) du dispositif de détection (100).

8. Le procédé selon l'une quelconque des revendications 1-7, dans lequel l'image numérique (300) comprend des données associées, et dans lequel le procédé comprend en outre l'étape consistant à inclure l'objet détecté (302) ou l'absence de l'élément (400) dans les données associées.

9. Procédé selon l'une quelconque des revendications 1-8, dans lequel le procédé comprend en outre l'étape consistant à déterminer un ensemble de coordonnées géographiques de l'image numérique (300) à partir des données associées.

10. Procédé selon l'une quelconque des revendications 1-9, dans lequel l'image numérique (300) comprend un format RVB ou un format IR, et dans lequel le modèle d'intelligence artificielle configuré pour détecter la présence de l'au moins un objet dans une image est en outre configuré pour détecter l'objet (302) dans l'image numérique (300) au format RVB et/ou au format IR, et/ou dans une combinaison desdits formats.

11. Système permettant de détecter la présence d'obstacles aux intersections routières en exécutant un procédé selon l'une quelconque des revendications 1 à 10, le système comprenant :
au moins un dispositif de détection (100) muni de moyens d'acquisition d'images (101) configurés pour obtenir des images numériques d'une intersection routière,
au moins une unité de traitement configurée pour détecter la présence d'un objet ou l'absence d'un élément dans l'image numérique, dans lequel, lorsque la présence de l'objet ou la non-absence d'un élément est détectée dans l'image numérique, la présence d'un obstacle est détectée à l'intersection routière ; et
des moyens de communication configurés pour permettre la communication de données avec un réseau de données.
